# EUROPÄISCHE PATENTSCHRIFT

(11) **EP 3 485 150 B1**
(45) Veröffentlichungstag und Bekanntmachung des Hinweises auf die Patenterteilung: **01.04.2020**
(21) Anmeldenummer: 17729359.4
(22) Anmeldetag: 12.06.2017
(51) Int. Cl.: F01M 1/02, F16N 25/00, F16N 39/06, F16H 57/04

(54) **ANTRIEBSVORRICHTUNG**
TRANSMISSION
TRASMISSION

(30) Priorität: 12.07.2016 DE 102016008377
(43) Veröffentlichungstag der Anmeldung: 22.05.2019
(73) Patentinhaber: SEW-EURODRIVE GmbH & Co. KG, 76646 Bruchsal (DE)
(72) Erfinder: WU, Zili, 300060 Tianjin (CN)
(86) Internationale Anmeldenummer: PCT/EP2017/025165
(87) Internationale Veröffentlichungsnummer: WO 2018/010847

(56) Entgegenhaltungen:
- WO-A1-03/042595
- CN-U- 201 561 258
- JP-A- 2012 052 649
- US-A- 3 107 553

## Beschreibung

Die Erfindung betrifft eine Antriebsvorrichtung.

Es ist allgemein bekannt, dass eine Antriebsvorrichtung Verlustwärme erzeugt.

**Aus der** CN 201 561 258 U **ist als nächstliegender Stand der Technik eine Antriebsvorrichtung bekannt.**

**Aus der** JP 2012 052 649 A **ist ebenfalls eine solche Vorrichtung bekannt.**

**Aus der** WO 03/042 595 A1 **ist eine Vorrichtung mit Druckschierungssystem bekannt.**

**Aus der** US 3 107 553 A **ist ein Getriebe bekannt.**

Der Erfindung liegt daher die Aufgabe zugrunde, eine Antriebsvorrichtung weiterzubilden, wobei eine möglichst einfache Herstellung und hohe Dichtigkeit bewirkbar ist.

Erfindungsgemäß wird die Aufgabe bei der Antriebsvorrichtung nach den in Anspruch 1 angegebenen Merkmalen gelöst.

Wichtige Merkmale der Erfindung bei der Antriebsvorrichtung sind, dass die Antriebsvorrichtung ein von einem Motor antreibbares Getriebe mit Druckschmierungssystem aufweist,
wobei das Druckschmierungssystem einen Verteilerblock aufweist,
wobei der Verteilerbock eine durchgehende Längsbohrung und durchgehende Querbohrungen aufweist,
wobei der Verteilerblock einstückig ausgeführt ist, insbesondere aus Metall, wie Stahl oder Aluminium.

Von Vorteil ist dabei, dass durch die einstückige Ausführung des Verteilerbocks eine einfache Herstellung ermöglicht ist. Außerdem ist dadurch eine hohe Dichtigkeit erreichbar. Denn bei einer mehrteiligen Ausführung müssen entsprechende Abdichtungen vorgesehen werden. Erfindungsgemäß müssen aber nur eine Anzahl von Bohrungen im Verteilerbock ausgeführt werden.

Bei einer vorteilhaften Ausgestaltung fördert eine Ölpumpe, insbesondere eine von einem Elektromotor angetriebene Ölpumpe, Öl aus dem Ölsumpf des Getriebes in eine erste Öffnung der Längsbohrung, insbesondere mittels einer Rohrleitung. Von Vorteil ist dabei, dass eine motorische Ölförderung vorgesehen ist.

**Erfindungsgemäß** führt eine Ölleitung aus einer ersten Querbohrung zum Getriebeinneren,
wobei die erste Querbohrung einen größeren Querschnitt aufweist als jede der anderen Querbohrungen. Von Vorteil ist dabei, dass das in die Längsbohrung eingeströmte Öl in die Querbohrung verteilt werden muss. Bei dieser Verteilung ist ein Ventil vorsehbar, mit welchem der Ölfluss steuerbar ist.

**Erfindungsgemäß** ist ein Ventil zur Unterbrechung des Ölflusses von der Längsbohrung zur ersten Querbohrung im Verteilerblock angeordnet, insbesondere innerhalb der Längsbohrung Von Vorteil ist dabei, dass ein Ventil das Verteilen des Öls von der Längsbohrung in die Querbohrung steuerbar ist.

Bei einer vorteilhaften Ausgestaltung weist die Längsbohrung eine Verengung auf. Von Vorteil ist dabei, dass ein Ventil anordenbar ist, indem eine bewegbar angeordnete Kugel gegen die Verengung drückbar ist oder von der Verengung weg. Abhängig von der Position der Kugel ist das Öl am Durchfluss gehindert oder nicht.

Bei einer vorteilhaften Ausgestaltung weist die Längsbohrung einen ersten Bereich auf, in welchem der Querschnitt kleiner ist als in zwei an den ersten Bereich angrenzenden Bereichen, welche durch den ersten Bereich voneinander beabstandet sind,
insbesondere wobei die Längsbohrung als gestufte Bohrung ausgeführt ist. Von Vorteil ist dabei, dass eine Verengung in einfacher Weise herstellbar ist, indem die Längsbohrung zunächst als Stufenbohrung ausgeführt wird, also eine erste durchgehende Bohrung längs ausgeführt wird, danach eine Sacklochbohrung, also eine nicht durchgehende Bohrung, mit größerem Bohrungsdurchmesser parallel und mittig zur ersten Bohrung von beiden Seiten der zur Umgebung hin gerichteten Mündung der ersten Bohrung ausgeführt wird. Somit ist also die Längsbohrung samt Verengung mittels drei Bohrvorgängen herstellbar.

Bei einer vorteilhaften Ausgestaltung sind ein oder mehrere Sensoren in den weiteren Querbohrungen vorgesehen,
insbesondere wobei als Sensor ein Temperatursensor, ein Drucksensor, ein druckabhängiger Schalter oder ein temperaturabhängiger Schalter angeordnet ist. Von Vorteil ist dabei, dass ein dichtes Verbinden der Sensoren ausführbar ist, da der Verteilerblock einstückig ausgeführt wird. Außerdem sind verschiedene Sensoren am Verteilerblock anbringbar, insbesondere an der jeweiligen Mündungsöffnung der jeweiligen Querbohrung. Somit sind Druck oder Temperatur einfach erfassbar.

Bei einer vorteilhaften Ausgestaltung ist ein Filter verbunden mit dem Verteilerblock. Von Vorteil ist dabei, dass das vom Verteilerblock verteilte Öl filterbar ist.

Bei einer vorteilhaften Ausgestaltung sind in den Verteilerblock Gewindebohrungen eingebracht, insbesondere zur Befestigung von Sensoren und/oder Anschlussteilen für Rohrleitung. Von Vorteil ist dabei, dass eine einfache und tragfähige Befestigung ausführbar ist.

Insbesondere ist ein jeweiliges Bohrbild derart insbesondere quadratisch ausführbar, dass der Mittelpunkt des Bohrbildes im Mittelpunkt der Bohrung angeordnet ist.

Bei einer vorteilhaften Ausgestaltung weist das Ventil eine mit einem Rückstellelement verbundene Kugel auf,
insbesondere wobei das Rückstellelement ein Federelement ist, welches mit einem ersten Endbereich mit dem Verteilerblock und mit einem vom ersten Endbereich beabstandeten Endbereich mit der Kugel verbunden ist. Von Vorteil ist dabei, dass ein schnelles und einfaches Herstellen ermöglicht ist.

Weitere Vorteile ergeben sich aus den Unteransprüchen.

Die Erfindung wird nun anhand von Abbildungen näher erläutert:
In der Figur 1 ist eine Schrägansicht eines Verteilerblocks 1 eine erfindungsgemäßen Druckschmierungssystems für ein Getriebe 38 gezeigt.
In der Figur 2 ist eine Schrägansicht des angeschnittenen Verteilerblocks 1 gezeigt.
In der Figur 3 ist das Druckschmierungssystem für das Getriebe 38 schematisch dargestellt.

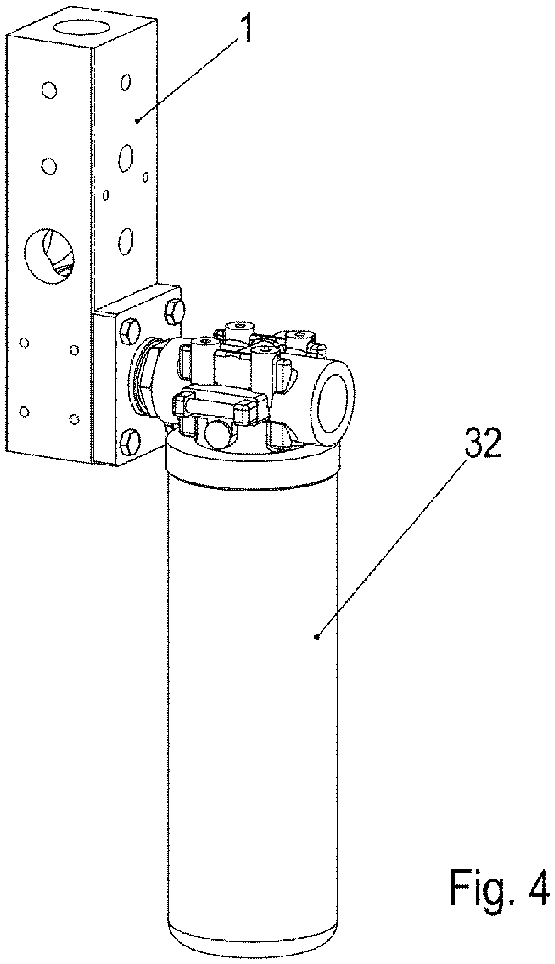

In der Figur 4 ist ein an den Verteilerblock 1 anmontierter Filter 32 gezeigt.

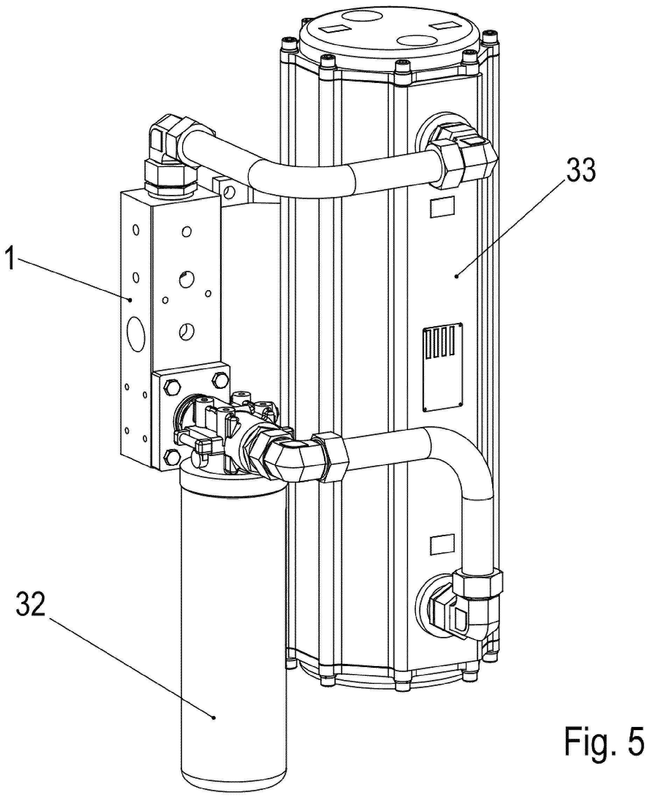

In der Figur 5 ist zusätzlich unterscheidend zur Figur 4 ein Kühler 33 mit dem Verteilerblock 1 verbunden.

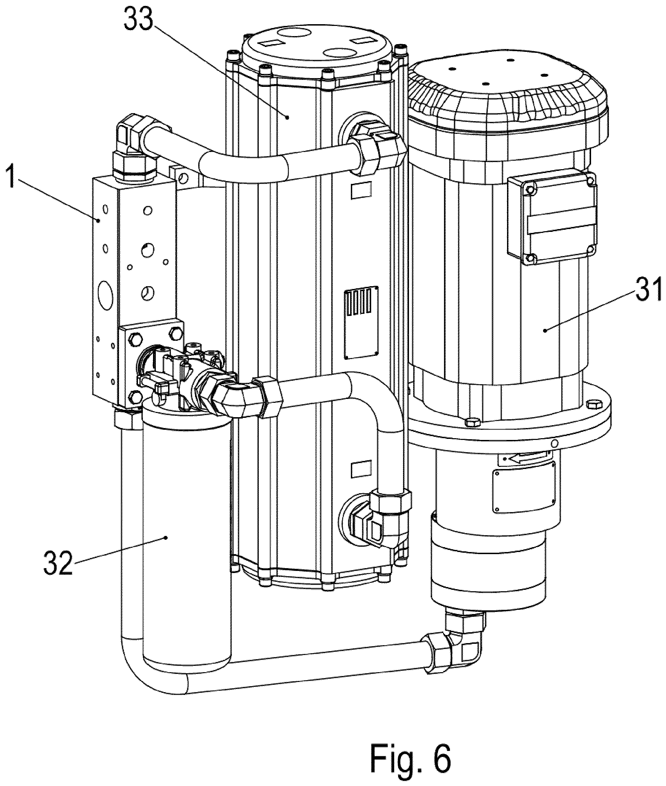

In der Figur 6 ist zusätzlich unterscheidend zur Figur 5 eine Motorpumpe 31 mit dem Verteilerblock 1 verbunden.

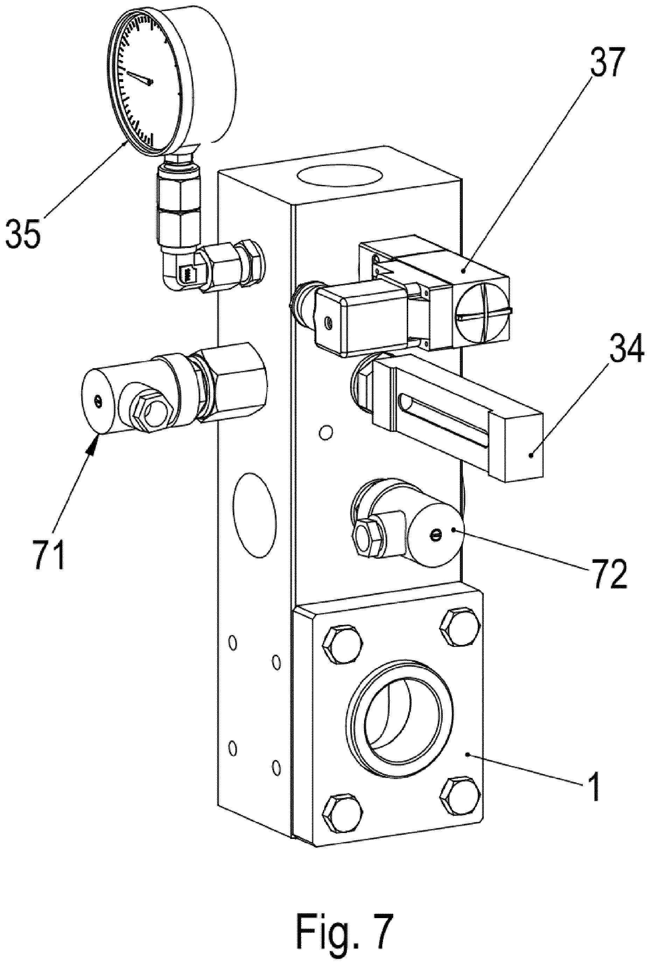

In der Figur 7 ist der Verteilerblock mit angeschlossenen Sensoren in Schrägansicht gezeigt.

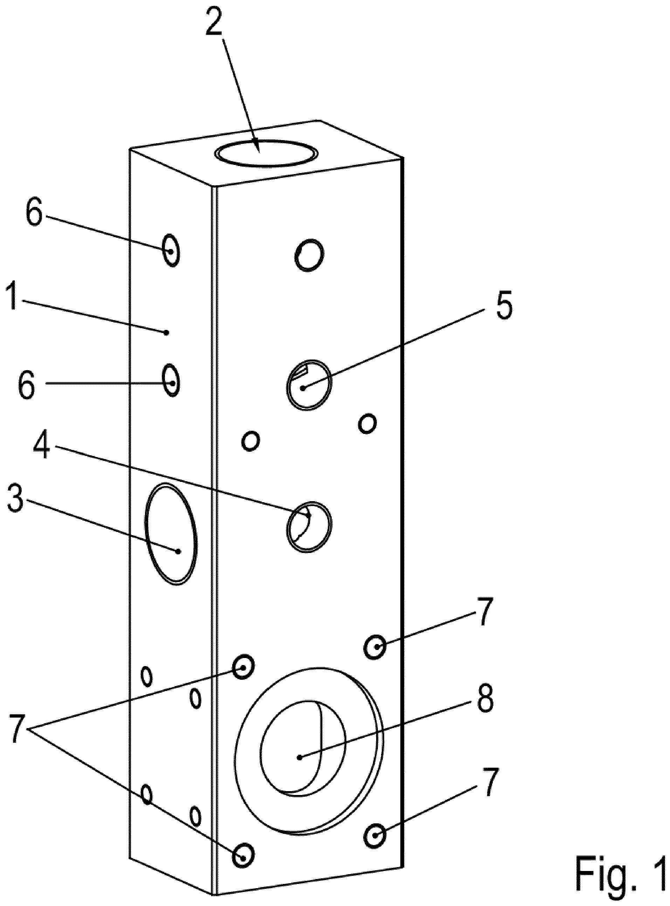

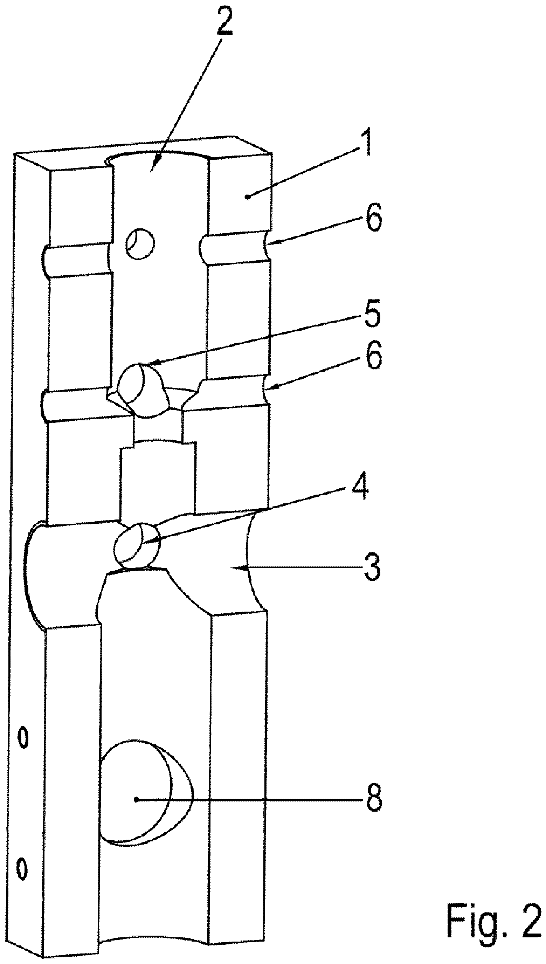

Wie in den Figur 1 und 2 gezeigt, weist der Verteilerblock 1 eine in der Richtung der längsten Ausdehnung des Verteilerblocks 1 durchgehende Längsbohrung 2 auf.

Diese Längsbohrung weist in einem mittleren Bereich des Verteilerblocks 1 eine Verengung auf.

Vor und hinter der Verengung weist der Verteilerblock 1 Querbohrungen (3, 4, 5, 6).

Von der Verengung weiter beabstandet weist der Verteilerblock 1 auch eine weitere Querbohrung 8 auf
Zur Befestigung weiterer Vorrichtungen an dem Verteilerblock 1 weist dieser Gewindebohrungen 7 auf, die beispielsweise in einem quadratischen Lochbild angeordnet sind, wobei die Bohrungsachse der jeweiligen Querbohrung mittig durch das Lochbild gerichtet angeordnet ist.

Somit sind die Vorrichtungen jeweils mit dem Verteilerblock verbindbar, insbesondere mittels schrauben.

An der Verengung ist beispielsweise ein Ventil anordenbar, wobei eine Kugel, mit welcher die durchgehende Längsbohrung an ihrer Verengung schließbar, an einem Rückstellelement befestigt ist, welches mit dem Verteilerblock 1 kraftschlüssig oder formschlüssig verbindbar ist.

Somit ist ein Ventilverhalten in einfacher Weise erreichbar: In einer ersten Fließrichtung des Kühlmittels wird die Kugel 30 gegen die Verengung gedrückt und in der anderen Fließrichtung wird die Kugel 30 von der Verengung weggedrückt. Mittels eines Rückstellelements A5 werden die Schwellwerte für Druckunterschied berücksichtigt.

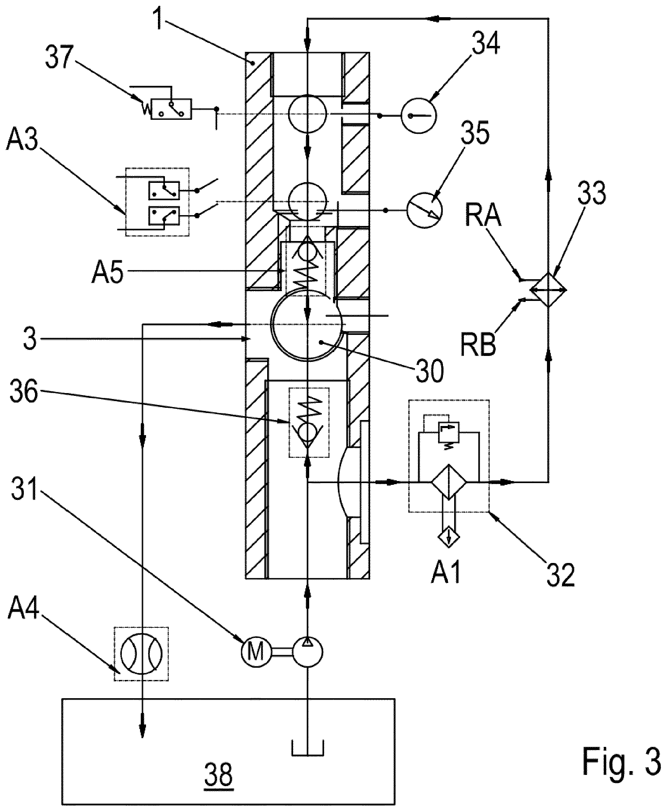

Wie in Figur 3 weiter gezeigt ist, treibt eine Motorpumpe 31 den Kühlreislauf an. Dabei strömt dann das vom Ölsumpf des Getriebes angesaugte und/oder geförderte Öl in die Längsbohrung 2 des Verteilerbocks 1 gefördert, wovon ein erster Teil einem Ventil 36 zugeführt wird und ein weiterer Teil über ein Filter 32 mit einer Verschmutzungsanzeige A1 an einen Kühler 33, insbesondere Flüssigkeitskühler.

Am Kühler 33 ist auch ein Wassereinlass RA und ein Wasserauslass RB angeordnet. Das durch den Kühler 33 hindurchgeförderte Öl wird an der anderen Öffnung der Längsbohrung 2 dieser zugeführt.

Die Querbohrungen (3, 4, 5, 6, 8) durchdringen die Längsbohrung 2. Somit ist ein Verteilen von Öl bewirkt.

Das Öl wird aus dem Verteilerblock 1 über die Querbohrung 3, welche den größten Durchmesser unter den Querbohrungen (3, 4, 5, 6, 8) aufweist, herausgeführt und dem Getriebe mittels Ölleitung zugeleitet.

In den anderen Querbohrungen (4, 5, 6, 8) sind jeweils ein Sensor, wie Temperatursensor 34 oder Drucksensor 35, angeordnet oder ein Schalter, wie druckabhängiger Schalter 37, Temperaturschalter 71, insbesondere temperaturabhängiger Schalter, oder Temperaturschalter 72, insbesondere temperaturabhängiger Schalter.

Am Temperatursensor 34 ist eine Anzeige A3 vorgesehen und am Durchflusssensor eine Anzeige A4

### Bezugszeichenliste

- 1: Verteilerblock
- 2: Längsbohrung
- 3: Querbohrung
- 4: Querbohrung
- 5: Querbohrung
- 6: Querbohrung
- 7: Gewindebohrung
- 8: Querbohrungsbohrung
- 30: Kugel des Ventils
- 31: Motorpumpe
- 32: Filter
- 33: Kühler, insbesondere Flüssigkeitskühler
- 34: Temperatursensor
- 35: Drucksensor
- 36: Ventil
- 37: Druckabhängiger Schalter
- 38: Getriebe

- 71: Temperaturschalter, insbesondere temperaturabhängiger Schalter
- 72: Temperaturschalter, insbesondere temperaturabhängiger Schalter

- A1: Verschmutzungsanzeige für Filter 32
- A3: Temperatursensor mit Anzeige
- A4: Durchflusssensor mit Anzeige
- A5: Ventil
- RA: Wassereinlass
- RB: Wasserauslass

## Patentansprüche

1. Antriebsvorrichtung, aufweisend ein von einem Motor antreibbares Getriebe (38) mit Druckschmierungssystem,
**wobei** das Druckschmierungssystem einen Verteilerblock (1) aufweist,
wobei der Verteilerbock eine durchgehende Längsbohrung (2) und durchgehende Querbohrung (3, 4, 5, 6) aufweist,
wobei der Verteilerblock (1) einstückig ausgeführt ist, insbesondere aus Metall, wie Stahl oder Aluminium,
**dadurch gekennzeichnet, dass**
**eine Ölleitung aus einer ersten Querbohrung (3) zum Getriebeinneren führt,**
**wobei die erste Querbohrung (3) einen größeren Querschnitt aufweist als jede der anderen Querbohrung (3, 4, 5, 6),**
**wobei ein Ventil (36) zur Unterbrechung des Ölflusses von der Längsbohrung (2) zur ersten Querbohrung im Verteilerblock (1) angeordnet ist, insbesondere innerhalb der Längsbohrung (2).**

2. Antriebsvorrichtung nach Anspruch 1,
**dadurch gekennzeichnet, dass**
eine Ölpumpe, insbesondere eine von einem Elektromotor angetriebene Ölpumpe, Öl aus feinem Ölsumpf des Getriebes (38) in eine erste Öffnung der Längsbohrung (2) fördert, insbesondere mittels einer Rohrleitung.

3. Antriebsvorrichtung nach mindestens einem der vorangegangenen Ansprüche,
**dadurch gekennzeichnet, dass**
die Längsbohrung (2) eine Verengung aufweist
und/oder dass
die Längsbohrung (2) einen ersten Bereich aufweist, in welchem der Querschnitt kleiner ist als in zwei an den ersten Bereich angrenzenden Bereichen, welche durch den ersten Bereich voneinander beabstandet sind,
insbesondere wobei die Längsbohrung (2) als gestufte Bohrung ausgeführt ist.

4. Antriebsvorrichtung nach mindestens einem der vorangegangenen Ansprüche,
**dadurch gekennzeichnet, dass**
ein oder mehrere Sensoren in den weiteren Querbohrung (3, 4, 5, 6) vorgesehen sind,
insbesondere wobei als Sensor ein Temperatursensor (34), ein Drucksensor (35), ein druckabhängiger Schalter oder ein temperaturabhängiger Schalter angeordnet ist.

5. Antriebsvorrichtung nach mindestens einem der vorangegangenen Ansprüche,
**dadurch gekennzeichnet, dass**
ein Filter (32) verbunden ist mit dem Verteilerblock (1).

6. Antriebsvorrichtung nach mindestens einem der vorangegangenen Ansprüche,
**dadurch gekennzeichnet, dass**
in den Verteilerblock (1) Gewindebohrungen (7) eingebracht sind, insbesondere zur Befestigung von Sensoren und/oder Anschlussteilen für Rohrleitung.

7. Antriebsvorrichtung nach mindestens einem der vorangegangenen Ansprüche,
**dadurch gekennzeichnet, dass**
das Ventil (36) eine mit einem Rückstellelement verbundene Kugel (30) aufweist,
insbesondere wobei das Rückstellelement ein Federelement ist, welches mit einem ersten Endbereich mit dem Verteilerblock (1) und mit einem vom ersten Endbereich beabstandeten Endbereich mit der Kugel (30) verbunden ist.

## Claims

1. A drive device, having a gear unit (38), which can be driven by a motor, with pressure lubrication system,
wherein the pressure lubrication system has a distributor block (1),
wherein the distributor block has a continuous longitudinal bore (2) and a continuous transverse bore (3, 4, 5, 6),
wherein the distributor block (1) is made in one piece, in particular from metal, such as steel or aluminium,
**characterised in that**
an oil line leads out of a first transverse bore (3) to the interior of the gear unit,
wherein the first transverse bore (3) has a larger cross-section than any of the other transverse bores (3, 4, 5, 6),
wherein a valve (36) for interrupting the oil flow from the longitudinal bore (2) to the first transverse bore is arranged in the distributor block (1), in particular within the longitudinal bore (2).

2. A drive device according to Claim 1,
**characterised in that**
an oil pump, in particular an oil pump driven by an electric motor, conveys oil out of an oil sump of the gear unit (38) into a first opening in the longitudinal bore (2), in particular by means of piping.

3. A drive device according to at least one of the preceding claims,
**characterised in that**
the longitudinal bore (2) has a constriction
and/or **in that**
the longitudinal bore (2) has a first region in which the cross-section is smaller than in two regions adjoining the first region which are spaced apart from each other by the first region,
in particular wherein the longitudinal bore (2) is formed as a stepped bore.

4. A drive device according to at least one of the preceding claims,
**characterised in that**
one or more sensors are provided in the further transverse bore (3, 4, 5, 6),
in particular wherein a temperature sensor (34), a pressure sensor (35), a pressure-dependent switch or a temperature-dependent switch is arranged as sensor.

5. A drive device according to at least one of the preceding claims,
**characterised in that**
a filter (32) is connected to the distributor block (1).

6. A drive device according to at least one of the preceding claims,
**characterised in that**
threaded bores (7) are formed in the distributor block (1), in particular for fastening sensors and/or connection parts for piping.

7. A drive device according to at least one of the preceding claims,
**characterised in that**
the valve (36) has a sphere (30) connected to a restoring element,
in particular wherein the restoring element is a spring element which is connected by a first end region to the distributor block (1) and by an end region which is spaced apart from the first end region to the sphere (30).

## Revendications

1. Dispositif d'entraînement équipé d'une transmission (38) pouvant être entraînée par un moteur et munie d'un système de lubrification sous pression,
ledit système de lubrification sous pression étant pourvu d'un bloc répartiteur (1),
lequel bloc répartiteur comprend un alésage longitudinal (2) ininterrompu et des alésages transversaux (3, 4, 5, 6) ininterrompus,
ledit bloc répartiteur (1) étant réalisé d'une seule pièce, notamment en un métal tel que de l'acier ou de l'aluminium,
**caractérisé par le fait**
**qu'**un conduit d'huile mène à l'espace interne de la transmission à partir d'un premier alésage transversal (3),
lequel premier alésage transversal (3) présente une section transversale supérieure à celle de chacun des autres alésages transversaux (4, 5, 6),
sachant qu'une soupape (36), affectée à l'interruption du flux d'huile gagnant ledit premier alésage transversal à partir de l'alésage longitudinal (2), est intégrée dans le bloc répartiteur (1), notamment à l'intérieur dudit alésage longitudinal (2).

2. Dispositif d'entraînement selon la revendication 1,
**caractérisé par le fait**
**qu'**une pompe à huile, en particulier une pompe à huile entraînée par un moteur électrique, refoule de l'huile dans une première ouverture de l'alésage longitudinal (2) à partir d'un carter d'huile de la transmission (38), en particulier au moyen d'un conduit tubulaire.

3. Dispositif d'entraînement selon au moins l'une des revendications précédentes,
**caractérisé par le fait que**
l'alésage longitudinal (2) présente un resserrement
et/ou **par le fait que**
ledit alésage longitudinal (2) comporte une première région dans laquelle la section transversale est plus petite que dans deux régions qui sont limitrophes de ladite première région et sont espacées l'une de l'autre par ladite première région,
ledit alésage longitudinal (2) étant réalisé sous la forme d'un alésage étagé.

4. Dispositif d'entraînement selon au moins l'une des revendications précédentes,
**caractérisé par le fait**
**qu'**un ou plusieurs capteur(s) est (sont) prévu(s) dans les autres alésages transversaux (3, 4, 5, 6),
sachant notamment qu'un capteur de température (34), un capteur de pression (35), un interrupteur tributaire de la pression, ou un interrupteur tributaire de la température, est installé en tant que capteur.

5. Dispositif d'entraînement selon au moins l'une des revendications précédentes,
**caractérisé par le fait**
**qu'**un filtre (32) est relié au bloc répartiteur (1).

6. Dispositif d'entraînement selon au moins l'une des revendications précédentes,
**caractérisé par le fait que**
des perçages taraudés (7) sont pratiqués dans le bloc répartiteur (1), notamment en vue de la fixation de capteurs et/ou de pièces de raccordement de conduit tubulaire.

7. Dispositif d'entraînement selon au moins l'une des revendications précédentes,
**caractérisé par le fait que**
la soupape (36) présente une bille (30) reliée à un élément de rappel,
sachant notamment que ledit élément de rappel est un élément élastique relié au bloc répartiteur (1) par une première région extrême, et à ladite bille (30) par une région extrême distante de ladite première région extrême.
